# EUROPÄISCHE PATENTSCHRIFT

(11) **EP 0 465 965 B1**
(45) Veröffentlichungstag und Bekanntmachung des Hinweises auf die Patenterteilung: **18.05.1994**
(21) Anmeldenummer: 91110824.9
(22) Anmeldetag: 29.06.1991
(51) Int. Cl.: B60R 11/02

(54) **Vorrichtung zur Halterung eines Mobiltelefones**
Device for mounting a mobile telephone
Dispositif pour le montage d'un téléphone

(30) Priorität: 07.07.1990 DE 9010298 U
(43) Veröffentlichungstag der Anmeldung: 15.01.1992
(73) Patentinhaber: Lauterbach, Cornelia, Dr., D-44141 Dortmund (DE)
(72) Erfinder: Lauterbach, Rudolf Th., Dipl.-Ing., W-4600 Dortmund 1 (DE)
(74) Vertreter: Patentanwälte Meinke, Dabringhaus und Partner

(56) Entgegenhaltungen:
- WO-A-90/07833
- DE-U- 9 002 355
- US-A- 4 617 430

## Beschreibung

Die Erfindung richtet sich auf eine Vorrichtung zur Halterung eines Mobiltelefones in einem mit einer Radio einbauöffnung versehenen Armaturenbrett eines Kraftfahrzeuges.

Mobiltelefone werden bereits in unterschiedlichen Ausführungsformen angeboten. Ihre Verbreitung schreitet stark voran. Ein wesentliches Einsatzgebiet derartiger Mobiltelefone ist es, ältere Lösungen von Autotelefonen zu ersetzen, wobei die Mobiltelefone häufig den Vorteil haben, daß sie auch aus dem Fahrzeug entnommen werden können, um auch außerhalb des Fahrzeuges als Telefon benutzt werden zu können.

Für den Einbau in Fahrzeugen ist man bisher den Weg gegangen, der durch die fest montierten Autotelefone in Fahrzeugen vorgegeben war, d.h. man montiert solche Mobiltelefone z.B. an sogenannten Schwanenhälsen, die z.B. einem Getriebetunnel eines Fahrzeuges angeschraubt werden, wobei nicht ausgeschlossen werden kann, daß sie entweder den Beifahrer behindern oder aber im Bereich des Schaltknüppels liegen. Auch läßt sich bei entsprechenden Montagen nicht verhindern, daß der Bedienungskomfort des Mobiltelefones stark reduziert wird.

Im Zusammenhang mit Autotelefonen sind einige Lösungen bekannt geworden, so eine Aufnahmevorrichtung für den Bedienteil eines Funksendeempfängers aus dem DE-U-89 07 089, Halter für Telefone aus dem DE-U-90 02 354 bzw. DE-U-90 02 355, wobei eine Halterung für den Hörer eines Autotelefones in dem DE-U-87 16 671 oder der US-A-4 617 430 beschrieben ist.

Aus der älteren, jedoch druckschriftlich nicht vorveröffentlichten VO-A-90/07833 bzw. der entsprechenden schwedischen Vorveröffentlichung SE-A-88 04 719 ist eine Lösung bekannt, bei der die Radioeinbauöffnung als Aufnahme für ein Autotelefon benutzt wird, das aus der Radioeinbauöffnung aus einer Reheposition in eine Benutzerposition verschwenkbar ist. Damit entfällt die Möglichkeit, ein Radio einzubauen, da die Radioeinbauöffnung bereits durch den Verschwenkmechanismus und weitere Teile des Telefons ausgefüllt ist.

Aufgabe der Erfindung ist die Schaffung einer Lösung, mit der mit einfachen Mitteln die Montage und Anordnung von Mobiltelefonen optimiert wird, ohne auf ein Radio verzichten zu müssen.

Zur Lösung schlägt die Erfindung eine Vorrichtung vor, die sich dadurch auszeichnet, daß die Halterung mit einem in die Radioeinbauöffnung einschiebbaren, die übliche Montage eines Autoradios erlaubenden Fixierrahmen ausgerüstet ist.

Die Erfindung macht sich die Erkenntnis zunutze, daß in der Regel Autoradios an sehr bedienerfreundlichen Plätzen im Fahrzeug angeordnet sind. Hier gibt es auch eine DIN- bzw. ISO-Norm mit der Ziffer 7736, nach der auch die Einbauöffnungen für die Autoradios genormt sind.

Durch die Nutzung dieser Öffnung als Montagesockel für die Halterung des Mobiltelefones wird erreicht, daß das Mobiltelefon immer an ergonomisch günstigen Plätzen angeordnet ist, ohne daß die Bedienungsfunktion des Radios dadurch gestört wäre. Der Fixierrahmen kann in die vorhandene Radioeinbauöffnung eingeschoben werden, danach kann das Radio in üblicher Weise montiert werden.

In Ausgestaltung ist vorgesehen, daß der Fixierrahmen mit einem Scharnierelement zur Befestigung eines am Telefon angebrachten weiteren Scharnierelementes ausgerüstet ist. Es versteht sich von selbst, daß das weitere Scharnierelement am Telefon in der Regel von einer Klemmhalterung oder einer Aufnahmeplatte gebildet wird, in die das Mobiltelefon einklemmbar ist bzw. auf der das Mobiltelefon befestigbar ist.

Die Erfindung sieht auch vor, daß Scharnier und Scharnierelement einschließlich Fixierrahmen mit einem Flachbandkabel und/oder einem Kabelkanal versehen sind. Damit ist eine geschützte Verkabelung insbesondere auch der Anschluß an vorgesehene Antennen und/oder Stromquellen od. dgl. fahrzeugintern möglich.

Die Erfindung ist nachstehend anhand der Zeichnung beispielsweise näher erläutert. Diese zeigt in
- Fig. 1: in vereinfachter Darstellung ein Ausführungsbeispiel einer Vorrichtung nach der Erfindung und in
- Fig. 2: einen Ausschnitt eines abgewandelten Ausführungsbeispieles.

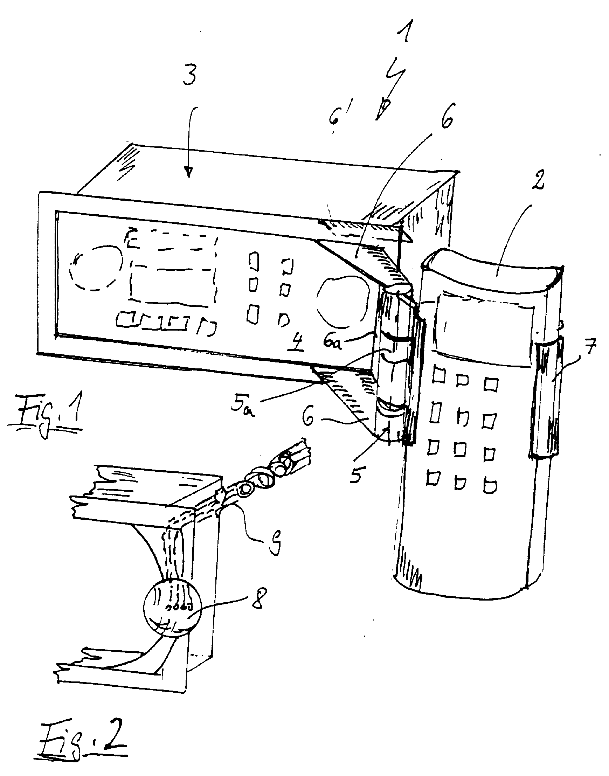

Die allgemein mit 1 bezeichnete Vorrichtung zur Halterung eines Mobiltelefones 2 wird im wesentlichen gebildet von einem Fixierrahmen 3, der in die Einbauöffnung eines Radios einschiebbar ist. Das Autoradio ist in Fig. 1 angedeutet und mit 4 bezeichnet, auf dessen Gestaltung kommt es hier nicht an.

Am Fixierrahmen 3 ist im Beispiel nach Fig. 1 ein Scharnierelement 5 an zwei Auslegerarmen 6, die integraler Bestandteil des Fixierrahmens sein können, angeordnet.

Zum Scharnierelement 5 an den Auslegerarmen 6 korrespondiert ein weiteres Scharnierelement, in Fig. 1 mit 5a bezeichnet, welches eine dort vereinfacht wiedergegebene Halterung 7 für das Mobiltelefon 2 aufweist. Im Beispiel nach Fig. 1 ist die Halterung 7 als Klemmelement ausgestaltet, hierauf kommt es nicht an. Es kann auch eine Tragplatte oder eine ähnliche Einrichtung sein.

Die Auslegerarme 6 können auch über eine Verbindung, in Fig. 1 mit 6a bezeichnet, zu einem querschnittlich im wesentlichen U-förmigen Rahmen miteinander verbunden sein. Auch können sie, beispielsweise um die Fertigung zu erleichtern, am Außenrand des Verblendrahmens angeformt werden, dies ist mit 6' bezeichnet.

In Fig. 2 ist eine weitere Ausgestaltung vorgesehen, hier ist das Scharnierelement als Kugelscharnier 8 wiedergegeben, wobei hier nur eines der Kugelelemente wiedergegeben ist. Das korrespondierende, die Kugel 8 übergreifende Scharnierteil ist in Fig. 2 nicht näher dargestellt.

Zusätzlich zeigt Fig. 2 die Möglichkeit, ein Flachbandkabel 9 oder einen entsprechenden Kabelkanal im Scharnierbereich vorzusehen, auch dies ist nur andeutungsweise wiedergegeben.

Erkennbar kann das Mobiltelefon 2 über die Vorrichtung 1 an einer für den Benutzer günstige Position verschwenkt oder verdreht werden. Es steht immer im unmittelbaren Bereich des Autotelefones zur Verfügung, ohne die Funktion des Autoradios 4 selbst zu behindern oder zu stören.

Wird das Autotelefon nicht benutzt oder ist der entsprechende Radioschacht von Haus aus mit der erfindungsgemäßen Halterung ausgerüstet, kann beispielsweise statt des Telefons in der Halterung auch eine Aufnahmebox für Kleinutensilien, etwa für Schreibstifte, Zigaretten, Papiertaschentücher od. dgl., dort eingeklemmt bzw. vorgesehen sein.

## Patentansprüche

1. Vorrichtung zur Halterung eines Mobiltelefones (2) im Bereich einer in einem Armaturenbrett eines Kraftfahrzeuges vorgesehenen Radioeinbauöffnung,
dadurch gekennzeichnet,
daß die Halterung (7) mit einem in die Radioeinbauöffnung einschiebbaren, die übliche Montage eines Autoradios (4) erlaubenden Fixierrahmen (3) ausgerüstet ist.

2. Vorrichtung nach Anspruch 1,
dadurch gekennzeichnet,
daß der Fixierrahmen mit einem Scharnierelement (5) zur Befestigung eines am Telefon angebrachten weiteren Scharnierelementes (5a) ausgerüstet ist.

3. Vorrichtung nach Anspruch 2,
dadurch gekennzeichnet,
daß Scharnier und Scharnierelement (5,8) einschließlich Fixierrahmen mit einem Flachbandkabel (9) und/oder einem Kabelkanal versehen sind.

## Claims

1. Apparatus for mounting a mobile telephone (2) in the region of a radio installation opening provided in a dashboard of a motor vehicle characterised in that the mounting means (7) is provided with a fixing frame (3) which can be inserted into the radio installation opening and which permits the usual fitment of a car radio (4).

2. Apparatus according to claim 1 characterised in that the fixing frame is provided with a hinge element (5) for fixing a further hinge element (5a) which is disposed on the telephone.

3. Apparatus according to claim 2 characterised in that the hinge and the hinge element (5, 8) including the fixing frame are provided with a flat band cable (9) and/or a cable passage.

## Revendications

1. Dispositif de retenue d'un téléphone mobile (2) dans la région d'une ouverture d'encastrement d'un autoradio, prévue dans un tableau de bord de véhicule automobile,
caractérisé par le fait
que le support (7) est équipé d'un cadre d'assujettissement (3) insérable dans l'ouverture d'encastrement de l'autoradio, et autorisant le montage classique d'un autoradio (4).

2. Dispositif selon la revendication 1,
caractérisé par le fait
que le cadre d'assujettissement est équipé d'un élément de charnière (5), en vue de la fixation d'un élément supplémentaire de charnière (5a) implanté sur le téléphone.

3. Dispositif selon la revendication 2,
caractérisé par le fait
que la charnière et l'élément de charnière (5, 8), y compris le cadre d'assujettissement, sont dotés d'un câble aplati (9) et/ou d'un canal passe-câble.
